# EUROPEAN PATENT APPLICATION

(11) **EP 4 393 664 A1**
(43) Date of publication of application: **03.07.2024**
(21) Application number: 23220287.9
(22) Date of filing: 27.12.2023
(51) Int. Cl.: B26B 15/00, B23D 29/00

(54) **CUTTING DEVICE**

(30) Priority: 27.12.2022 JP 2022210196; 27.12.2022 JP 2022210296; 27.12.2022 JP 2022210302; 27.12.2022 JP 2022210308; 27.12.2022 JP 2022210362; 27.12.2022 JP 2022210372; 27.12.2022 JP 2022210594; 27.12.2022 JP 2022210638
(71) Applicant: Max Co., Ltd., Tokyo 103-8502 (JP)
(72) Inventor: SUTO, Kohei, Tokyo, 103-8502 (JP); MORIMURA, Takashi, Tokyo, 103-8502 (JP); YOSHIMURA, Kazunobu, Tokyo, 103-8502 (JP); SANO, Shoma, Tokyo, 103-8502 (JP)
(74) Representative: Samson & Partner Patentanwälte mbB

(57) **Abstract**

An electric cutting device includes: a pair of cutting blades having a first blade and a second blade, the pair of cutting blades being configured to clamp and cut an object; an electric motor configured to generate a driving force necessary for operating the cutting blades; a control unit configured to control an operation of the electric motor; a first member provided with the first cutting blades; a second member provided with the second cutting blade; a restriction portion configured to come into contact with at least one of the first member and the second member to restrict an operable range of the pair of cutting blades; and a contact detection unit configured to detect that at least one of the first member and the second member comes into contact with the restriction portion.

## Description

### TECHNICAL FIELD

The present disclosure relates to an electric cutting device.

### BACKGROUND ART

As an electric cutting device, an electric pruning shear and the like as described in JP2021-40594A are known, for example. In an electric cutting device, cutting blades are operated by a driving force of an electric motor instead of a gripping force of a user, and cut an object to be cut by clamping the object with the pair of cutting blades. The above electric pruning shear is one in which a tree branch is set as an object to be cut, but a cutting device in which metal such as a reinforcing bar is set as the object to be cut is also well-known.

### SUMMARY

In an electric cutting device, in order to appropriately control an operation of a cutting blade, it is preferable to accurately know a current position of the cutting blade at each time point during the operation. As a configuration for knowing the current position of the cutting blade, for example, as described in the JP2021-40594A, a configuration in which a proximity sensor such as a Hall sensor is provided in an internal drive mechanism can be considered. Specifically, for example, a configuration can be considered in which a magnet is provided to a nut of a ball screw, and the Hall sensor is provided at a specific location within a movement range of the nut.

However, there is a possibility that a part of the object to be cut may enter an internal space including the movement range of the nut as a foreign object. If the foreign object adheres to the Hall sensor, it becomes impossible to accurately know a position of the nut and the current position of the corresponding cutting blade. As a result, it becomes difficult to appropriately control the operation of the cutting blade.

Illustrative aspects of the present disclosure provide a cutting device that can appropriately control an operation of a cutting blade based on a current position of the cutting blade.

One illustrative aspect of the present disclosure provides an electric cutting device including: a pair of cutting blades having a first blade and a second blade, the pair of cutting blades being configured to clamp and cut an object; an electric motor configured to generate a driving force necessary for operating the cutting blades; a control unit configured to control an operation of the electric motor; a first member provided with the first cutting blades; a second member provided with the second cutting blade; a restriction portion configured to come into contact with at least one of the first member and the second member to restrict an operable range of the pair of cutting blades; and a contact detection unit configured to detect that at least one of the first member and the second member comes into contact with the restriction portion.

In the cutting device configured as described above, movement of the first member or the like provided with the cutting blade is physically restricted by coming into contact with the restriction portion. The contact detection unit is configured to detect that the first member or the like comes into contact with the restriction portion. A position of the cutting blade at the time of contact is known. Therefore, by operating the first member and the second member until contact is detected by the contact detection unit, the pair of cutting blades can be moved to a preset initial position. Then, a current position of the cutting blades can be known by calculating an operation amount of the first member or the like from the initial position based on, for example, a rotation amount of the electric motor. Accordingly, it becomes possible to appropriately control the operation of the cutting blade, such as stopping the cutting blade at a predetermined target position.

According to the present disclosure, a cutting device that can appropriately control an operation of a cutting blade based on a current position of the cutting blade is provided.

### BRIEF DESCRIPTION OF DRAWINGS

FIG. 1 is a diagram showing a configuration of a cutting device according to a first illustrative embodiment;
FIG. 2 is a diagram showing a configuration of a guide plate included in the cutting device according to the first illustrative embodiment;
FIG. 3 is a diagram showing a configuration of blade members included in the cutting device according to the first illustrative embodiment;
FIG. 4 is a diagram showing a configuration of a control board included in the cutting device according to the first illustrative embodiment;
FIG. 5 is a flowchart showing a flow of processing executed by the control board;
FIG. 6 is a flowchart showing a flow of processing executed by the control board;
FIG. 7 is a flowchart showing a flow of processing executed by the control board;
FIG. 8 is a diagram showing a configuration of a cutting device according to a modification of the first illustrative embodiment;
FIG. 9 is a diagram showing a configuration of blade members included in a cutting device according to a second illustrative embodiment;
FIG. 10 is a diagram showing a configuration of blade members included in the cutting device according to the second illustrative embodiment;
FIG. 11 is a diagram showing an example of a temporal change in current supplied to an electric motor;
FIG. 12 is a flowchart showing a flow of processing executed by a control board;
FIG. 13 is a flowchart showing a flow of processing executed by the control board; and
FIG. 14 is a diagram showing a configuration of a cutting device according to a modification of the second illustrative embodiment.

### DESCRIPTION OF EMBODIMENTS

The present illustrative embodiment will be described below with reference to the accompanying drawings. In order to facilitate understanding of the description, the same components are denoted by the same reference numerals as much as possible in the drawings, and redundant descriptions will be omitted.

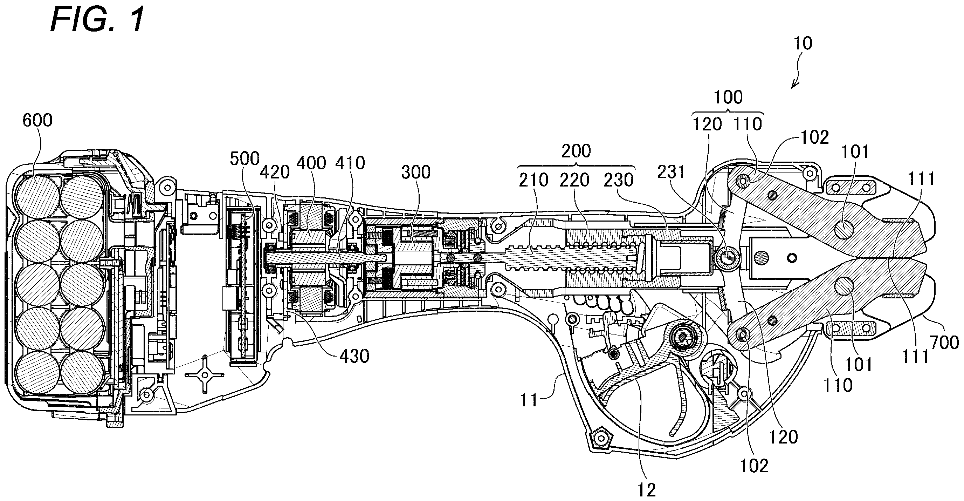

A first illustrative embodiment will be described. A cutting device 10 according to the present illustrative embodiment is an electric cutting device, and is configured as a device for cutting a reinforcing bar at a construction site or the like. A configuration of the cutting device 10 will be described mainly with reference to FIG. 1. The cutting device 10 includes a housing 11, a trigger switch 12, a cutting mechanism 100, a ball screw 200, a speed reducer 300, an electric motor 400, a control board 500, and a storage battery 600.

The housing 11 is a container that defines an outer shape of the cutting device 10. The housing 11 is made of resin, for example. The ball screw 200 described later, the speed reducer 300 described later, and the like are housed inside the housing 11. In FIG. 1, a portion of the housing 11 on a front side when viewed on paper is removed, and an internal configuration of the cutting device 10 is shown as a cross-sectional view.

The trigger switch 12 is a switch operated by a finger of a user. The user can turn on the trigger switch 12 by placing his or her finger on the trigger switch 12 and pulling the trigger switch 12 to the front side. When the user loosens his or her finger, the trigger switch 12 returns to an original position due to a force of a spring, and is turned off. When the trigger switch 12 is switched between the ON state and the OFF state, a corresponding signal is transmitted to the control board 500 described later. As will be described later, when the trigger switch 12 is turned on by an operation of the user, an operation for cutting a reinforcing bar is started.

The cutting mechanism 100 is a portion that cuts the reinforcing bar which is an object to be cut. The cutting mechanism 100 includes a pair of blade members 110 and a pair of link members 120.

Cutting blades 111 that clamp and cut the object to be cut are formed on the respective blade members 110. The blade member 110 is held pivotably about a shaft 101 fixed to the housing 11. In the present illustrative embodiment, the respective blade members 110 are arranged to face each other such that ridge lines of blade edges of the cutting blades 111 operate on trajectories passing through substantially the same plane. Accordingly, it is possible to switch between an opened state where the respective cutting blades 111 are spaced apart from each other and a closed state where the respective cutting blades 111 come into contact with (or close to) each other. In the example of FIG. 1, the pair of cutting blades 111 are in the closed state. One blade member 110 corresponds to a "first member" in the present illustrative embodiment, and the other blade member 110 corresponds to a "second member" in the present illustrative embodiment. One cutting blade 111 corresponds to a "first blade" in the present illustrative embodiment, and the other cutting blade 111 corresponds to a "second blade" in the present illustrative embodiment.

Each link member 120 is a rod-shaped member, and one end is connected to the blade member 110 via a shaft 102, and the other end is connected to a connection member 230 described later via a shaft 231. The link member 120 and the blade member 110 are connected to each other in a manner of pivoting about the shaft 102. Similarly, the link member 120 and the connection member 230 are connected to each other in a manner of pivoting about the shaft 231. As will be described later, the connection member 230 moves in a left-right direction in FIG. 1 by a driving force of the electric motor 400.

If the connection member 230 moves in the left direction from the state shown in FIG. 1, the blade member 110 on an upper side of FIG. 1 pivots counterclockwise, and the blade member 110 on a lower side of FIG. 1 pivots clockwise. Accordingly, the pair of cutting blades 111 change from the closed state to the opened state. On the other hand, when the pair of cutting blades 111 are in the opened state, if the connection member 230 moves in the right direction in FIG. 1, the blade member 110 on the upper side of FIG. 1 pivots clockwise, and the blade member 110 on the lower side of FIG. 1 pivots counterclockwise. Accordingly, the pair of cutting blades 111 return to the closed state. Accordingly, the pair of blade members 110, the pair of link members 120, and the connection member 230 as a whole constitute a so-called "toggle link mechanism".

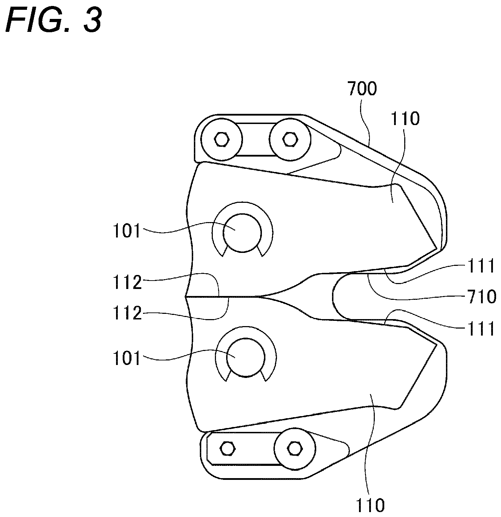

For convenience of description, a right side in FIG. 1 will also be referred to as a "front end side" below, and a left side in FIG. 1 will be referred to as a "rear end side" below. FIG. 3 shows a state where a space between the pair of cutting blades 111 is widest, that is, a fully opened state. A contact portion 112 is formed at a portion of each blade member 110, which is closer to the rear end side than the cutting blade 111. When the cutting blades 111 move away from each other, the respective contact portions 112 move towards each other. Finally, the respective contact portions 112 come into contact with each other as shown in FIG. 3, and thus, the cutting blades 111 cannot be opened any further. That is, the cutting blades 111 are fully opened.

The contact portion 112 of one blade member 110 comes into contact with the contact portion 112 of the other blade member 110 to restrict an operable range of the other blade member 110. Each contact portion 112 corresponds to a "restriction portion" in the present illustrative embodiment. The restriction portion according to the present illustrative embodiment restricts a position of each cutting blade 111 in a state where a distance between the cutting blades 111 is the longest.

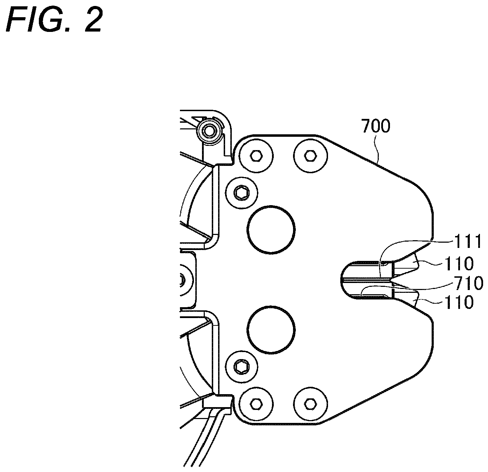

In the present illustrative embodiment, a pair of guide plates 700 are provided near the blade members 110. The guide plates 700 are plate-shaped members made of metal, and are disposed to sandwich the blade members 110 from both the front side and the back side in FIG. 1 when viewed on paper. Shapes of the pair of guide plates 700 are the same. As shown in FIG. 2 and FIG. 3, each guide plate 700 has a recess 710 formed therein.

The recess 710 is formed to recede from the front end side toward the rear end side of the guide plate 700. When the cutting device 10 is viewed from the side as shown in FIG. 1 and FIG. 2, each recess 710 is formed at a position that includes the cutting blade 111 in the closed state. As shown in FIG. 3, in a standby state where the cutting blades 111 are fully opened, the cutting blades 111 are retracted to the outside of the recesses 710, and the entire blade members 110 are hidden by the guide plates 700. The guide plates 700 have both a function of covering and protecting the cutting blades 111 in the standby state, and a function of guiding the reinforcing bar, which is the object to be cut, along the recesses 710 between the pair of cutting blades 111. The guide plates 700 further have a function of stabilizing a posture of the cutting device 10 before and after cutting by sandwiching the reinforcing bar in the recesses 710 .

The ball screw 200 is a device for converting a rotational movement of the electric motor 400 into a linear movement of the connection member 230, thereby causing the cutting mechanism 100 to operate. The ball screw 200 includes a screw shaft 210, a nut 220, and the connection member 230.

The screw shaft 210 is a rod-shaped member that extends linearly from the rear end side to the front end side. A male screw is formed on an outer peripheral surface of the screw shaft 210. When the electric motor 400 is driven, the screw shaft 210 rotates about a central axis thereof.

The nut 220 is a substantially cylindrical member disposed to surround the screw shaft 210 from an outer peripheral side. A female screw is formed on an inner peripheral surface of the nut 220, and is screwed to the male screw formed on the outer peripheral surface of the screw shaft 210. While the nut 220 is allowed to move along a longitudinal direction of the screw shaft 210, rotation about the central axis of the screw shaft 210 is restricted. Therefore, when the screw shaft 210 rotates about the central axis thereof, the nut 220 moves in the left-right direction in FIG. 1 along the central axis.

The connection member 230 is a member attached to the nut 220 and is a member that moves along the screw shaft 210 together with the nut 220. The connection member 230 is attached in a manner of protruding from the nut 220 toward the front end side. The pair of link members 120 are connected to a portion of the connection member 230 near an end on the front end side via the shaft 231 described above.

The speed reducer 300 is a device that reduces a rotation speed of an output shaft 410 of the electric motor 400 and then transmits the rotation to the screw shaft 210 of the ball screw 200.

The electric motor 400 is a rotating electrical machine for generating a driving force necessary for operating the cutting blades 111. The electric motor 400 is, for example, a brushless DC motor. The electric motor 400 has the output shaft 410. The output shaft 410 is a substantially cylindrical member, and a central axis thereof coincides with the central axis of the screw shaft 210. Apart of the output shaft 410 protrudes toward the speed reducer 300 and is connected to the speed reducer 300.

When current is supplied to a coil of the electric motor 400, the output shaft 410 rotates about the central axis thereof. The rotation of the output shaft 410 is transmitted to the screw shaft 210 via the speed reducer 300, and causes the nut 220 to move toward the front end side or the rear end side. Accordingly, the cutting blades 111 of the cutting mechanism 100 are operated to open and close as described above.

A rotation sensor 420 is provided inside the electric motor 400. The rotation sensor 420 is configured to emit a pulse signal every time the output shaft 410 rotates by a predetermined angle. The rotation sensor 420 is provided on a board 430 included in the electric motor 400. The pulse signal from the rotation sensor 420 is transmitted to the control board 500. By counting the number of pulse signals, the control board 500 can know a rotation angle of the output shaft 410 after a specific timing. The control board 500 can also know the rotation speed of the output shaft 410 based on the number of pulse signals input per unit time. The rotation sensor 420 may be a different type of a sensor from that of the present illustrative embodiment, or may be a sensor separately provided at a position different from the electric motor 400 as long as the sensor can measure the rotation angle of the output shaft 410.

The control board 500 is a circuit board provided to control an overall operation of the cutting device 10 including the electric motor 400. The control board 500 includes an inverter circuit for adjusting current supplied to the electric motor 400, a microcomputer for controlling a switching operation and the like in the inverter circuit, and the like.

The storage battery 600 stores electric power necessary for operating the electric motor 400 and the control board 500. The storage battery 600 is, for example, a lithium ion battery. In the cutting device 10, a portion in which the storage battery 600 is built is detachable from the housing 11 as a battery pack, and is connected to and charged by an external charger. Instead of such an aspect, a configuration may be adopted in which the storage battery 600 can be charged while the storage battery 600 is attached to the housing 11.

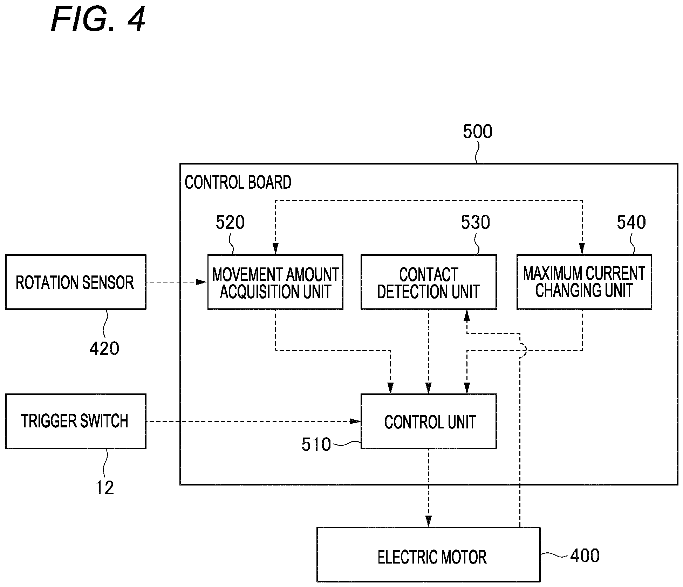

A configuration of the control board 500 will be described with reference to FIG. 4. The control board 500 including the microcomputer includes a control unit 510, a movement amount acquisition unit 520, a contact detection unit 530, and a maximum current changing unit 540 as elements representing functions of the control board 500.

The control unit 510 is configured to control the operation of the electric motor 400. The control unit 510 is configured to control an opening and closing operation of the cutting blades 111 by adjusting magnitude of current supplied to the electric motor 400, for example, by PWM control. The control unit 510 is also configured to control a braking operation of the cutting blades 111 by performing a so-called "short braking" that short-circuits some of a plurality of coils included in the electric motor 400 periodically or continuously.

The movement amount acquisition unit 520 is configured to perform processing of acquiring a movement amount of each blade member 110 from a state where the contact portions 112 of the pair of blade members 110 come into contact with each other. In the present illustrative embodiment, a count value of the pulse signal transmitted from the rotation sensor 420 is used as the "movement amount" described here. A method for acquiring the count value as the movement amount will be described later. The "movement amount" acquired by the movement amount acquisition unit 520 may be an index that directly or indirectly indicates the movement amount of the blade member 110, and may be a value other than the count value of the pulse signal. For example, when an angle between the pair of cutting blades 111 is set as θ, a change amount of θ may be used as the "movement amount".

The contact detection unit 530 is configured to perform processing of detecting that the contact portions 112 of the pair of blade members 110 come into contact with each other. When the electric motor 400 is driven to cause the cutting blades 111 to operate in an opening direction, if the contact portions 112 come into contact with each other and do not move any further, current supplied to the electric motor 400 increases from that time point as a load increases. Therefore, the contact detection unit 530 is configured to detect the contact between the contact portions 112 based on current supplied to the electric motor 400. Specifically, the contact detection unit 530 compares a value of current supplied to the electric motor 400 with a predetermined reference value, and detects that the contact portions 112 come into contact with each other if the value of current exceeds the reference value. The value of current supplied to the electric motor 400 may be measured by, for example, a current sensor (not shown) built into the electric motor 400. The current sensor may be provided outside the electric motor 400. Incidentally, the contact detection unit 530 may be configured to perform the detection of the contact based on an operating parameter of the electric motor 400. For example, the contact detection unit 530 may be configured to compare a value of the operating parameter of the electric motor 400 with a predetermined reference value, and detect that at least one of the pair of blade members 110 comes into contact with the restriction portion if the value of the operating parameter of the electric motor 400 exceeds the reference value.

A switching circuit (not shown) included in the control board 500 is configured to control current supplied to the electric motor 400 while suppressing current to a predetermined current limit value or less. The current limit value can be said to be a maximum value of current that can be supplied to the electric motor, and is a variable parameter that can be freely changed by the control board 500. The maximum current changing unit 540 is configured to perform processing of changing the current limit value. A specific content of the processing performed by the maximum current changing unit 540 will be described later.

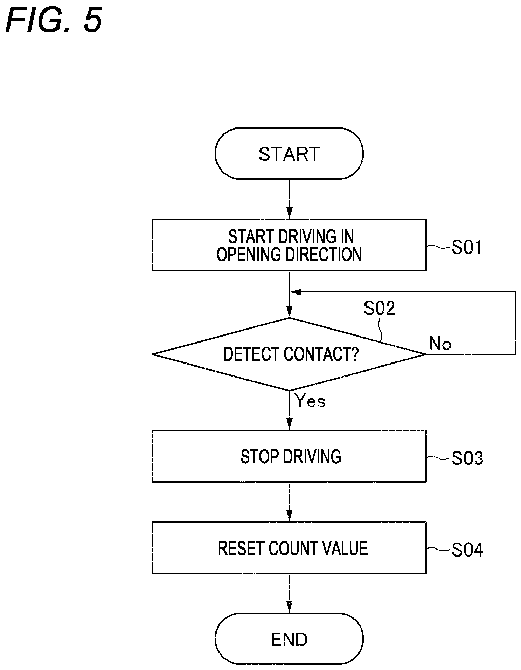

A specific flow of processing executed by the control board 500 will be described. A series of processing shown in a flowchart of FIG. 5 is automatically started when a main power supply is turned on and the cutting device 10 is started. The processing shown in FIG. 5 may not be started automatically even when the main power supply is turned on, but may be started at a timing when the trigger switch 12 is first turned on by the user.

In a first step S01, the control unit 510 performs processing of driving the electric motor 400 to start operating the cutting blades 111 in the opening direction. After that, the cutting blades 111 are opened at a substantially constant speed.

In step S02 following step S01, the contact detection unit 530 determines whether the contact between the contact portions 112 is detected. As described above, this determination is made based on whether the value of current supplied to the electric motor 400 exceeds the predetermined reference value.

If the contact between the contact portions 112 is not detected, that is, if the value of current supplied to the electric motor 400 is less than or equal to the reference value, the processing in step S02 is executed again while driving of the electric motor 400 is continued. If the contact between the contact portions 112 is detected, that is, if the value of current supplied to the electric motor 400 exceeds the reference value, the processing proceeds to step S03.

In step S03, driving of the electric motor 400 is stopped. Accordingly, the cutting blades 111 are stopped at a fully opened position.

In step S04 following step S03, the count value of the pulse signal transmitted from the rotation sensor 420 is reset to zero. After this, the movement amount acquisition unit 520 changes the count value as the cutting blades 111 move, but the value always represents the movement amount of the cutting blades 111 with respect to the fully opened position. That is, the count value can be used as a value representing an absolute position of each cutting blade 111. The processing shown in FIG. 5 is initialization processing for making the count value correspond to the absolute position of the cutting blade 111. When the processing is completed, the cutting device 10 enters into the standby state with the cutting blades 111 in the fully opened state.

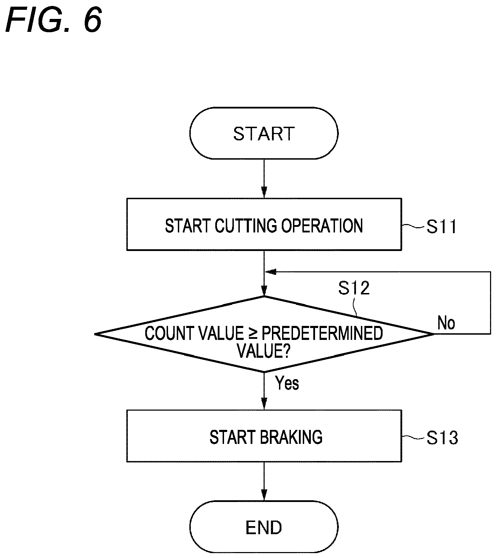

In the standby state, when the user operates and turns on the trigger switch 12, processing shown in FIG. 6 is started.

In a first step S11 of the processing, the control unit 510 performs the processing of driving the electric motor 400 to start operating the cutting blades 111 in a closing direction. Accordingly, cutting of the reinforcing bar, which is the object to be cut, is started. Immediately after the cutting blades 111 start to move, the cutting blades 111 come into contact with the reinforcing bar (not shown), and as the cutting blades 111 move further, the reinforcing bar is plastically deformed. In many cases, the reinforcing bar breaks while the cutting blades 111 are moving.

In step S12 following step S11, it is determined by the control board 500, for example, whether the movement amount acquired by the movement amount acquisition unit 520, that is, the count value is larger than or equal to a predetermined value. The "predetermined value" is preset as a value corresponding to a position where braking of the cutting blades 111 moving in the closing direction is to be started. For example, the above predetermined value may be set as a value corresponding to a position where the cutting blades 111 move from a fully closed position to a front side by a braking distance. Considering that the braking distance changes depending on an operation speed of the cutting blades 111, the above predetermined value may be changed each time depending on the operation speed of the cutting blades 111.

If the count value is less than the predetermined value, the processing in step S12 is executed again while the operation of the cutting blades 111 is continued. If the count value is larger than or equal to the predetermined value, the processing proceeds to step S13. In step S13, the control unit 510 starts braking the cutting blades 111. Then, the cutting blades 111 are stopped at a target position. The target position may be a position where the cutting blades 111 are fully closed, but may also be a position slightly on a front side of the fully closed position, that is, a position where a small gap is formed between the cutting blades 111. Accordingly, the control unit 510 determines a timing to start braking the cutting blades 111 based on the movement amount (that is, count value) acquired by the movement amount acquisition unit 520.

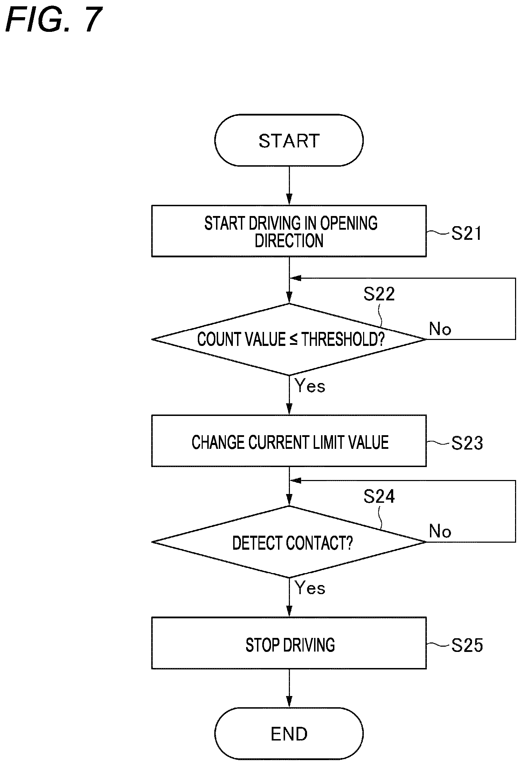

After the cutting of the reinforcing bar is completed, processing shown in a flowchart of FIG. 7 is executed, and the cutting blades 111 are returned to the original fully opened position. The processing may be started automatically after the cutting is completed, and may also be started after the user returns the trigger switch 12 to an original position thereof (that is, to the OFF state), for example.

In a first step S21 in FIG. 7, the control unit 510 performs the processing of driving the electric motor 400 to start operating the cutting blades 111 in the opening direction. After that, the cutting blades 111 are opened at a substantially constant speed. As the cutting blades 111 move in the opening direction, the movement amount acquired by the movement amount acquisition unit 520, that is, the count value gradually decreases.

In step S22 following step S21, it is determined by the control board 500, for example, whether the above count value is less than or equal to a predetermined threshold. The "threshold" is preset as a value corresponding to a position at a timing when the current limit value is to be changed to a smaller value than before. If the count value exceeds the threshold, the processing in step S22 is executed again while the operation of the cutting blades 111 is continued. If the count value becomes less than or equal to the threshold, the processing proceeds to step S23.

In step S23, the maximum current changing unit 540 performs the processing of changing the current limit value to a smaller value than before. Since an upper limit of a force that can be generated by the cutting blades 111 is reduced, a situation where the contact portions 112 violently collide with each other when reaching the fully opened position is prevented. Accordingly, there is no need to ensure durability of the blade members 110 and surrounding members thereof more than necessary, and thus, it is possible to reduce a size and a weight of the members.

Accordingly, the maximum current changing unit 540 determines a timing to change the current limit value based on the movement amount acquired by the movement amount acquisition unit 520. The timing to change the current limit value to a smaller value is a time when the pair of cutting blades 111 are operating, and is preferably a timing before the contact portions 112 of the blade members 110 come into contact with each other. That is, as in the present illustrative embodiment, it is preferable that the threshold used in the determination in step S22 in FIG. 7 be set such that the contact portions 112 come into contact with each other after the current limit value is changed.

In step S24 following step S23, the contact detection unit 530 determines whether the contact between the contact portions 112 is detected. If the contact between the contact portions 112 is not detected, that is, if the value of current supplied to the electric motor 400 is less than or equal to the reference value, the processing in step S24 is executed again while driving of the electric motor 400 is continued. If the contact between the contact portions 112 is detected, that is, if the value of current supplied to the electric motor 400 exceeds the reference value, the processing proceeds to step S25.

In step S25, driving of the electric motor 400 is stopped. Accordingly, the cutting blades 111 are stopped at a fully opened position. Then, similar to step S04 in FIG. 5, the processing of resetting the count value of the pulse signal to zero may be performed. Thereafter, the cutting device 10 returns to the standby state.

When the cutting blades 111 are returned to the fully opened position, as described above, the electric motor 400 may be driven until the contact portions 112 come into contact with each other, and the braking similar to that in step S13 in FIG. 6 may be performed at a predetermined timing before the contact.

As described above, in the cutting device 10 according to the present illustrative embodiment, the movement of the blade members 110 provided with the cutting blades 111 is physically restricted by the contact with the restriction portions (contact portions 112). The contact with the restriction portions is detected by the contact detection unit 530, and the subsequent position of the cutting blades 111 is acquired by the movement amount acquisition unit 520. Accordingly, it is possible to appropriately control the operation of the cutting blades 111, such as stopping the cutting blades 111 at a predetermined target position.

In acquiring the position of the cutting blades 111, there is no necessity to equip a magnet or a Hall sensor around the nut. Therefore, a situation where the position of the cutting blades 111 cannot be acquired due to a foreign object adhering to the Hall sensor will not occur.

The contact detection unit 530 detects that at least one of the pair of blade members 110 comes into contact with the restriction portions based on current supplied to the electric motor 400 as described above. Instead of such an aspect, contact may be detected based on a voltage applied to the electric motor 400. For example, the contact detection unit 530 may be configured to compare a value of the voltage applied to the electric motor 400 with a predetermined reference value, and detect that at least one of the pair of blade members 110 comes into contact with the restriction portion if the value of the voltage exceeds the reference value.

When the electric motor 400 is driven to cause the cutting blades 111 to operate in the opening direction, if the contact portions 112 come into contact with each other and do not move any further, the voltage applied to the electric motor 400 decreases as current increases. Therefore, the contact detection unit 530 can compare a value of the voltage applied to the electric motor 400 with a predetermined reference value, and detect that the contact portions 112 come into contact with each other if the value of the voltage is lower than the reference value.

The contact detection unit 530 may perform detection based on the number of rotations of the electric motor 400 per unit time, that is, a change amount of the count value per unit time.

When the electric motor 400 is driven to cause the cutting blades 111 to operate in the opening direction, if the contact portions 112 come into contact with each other and do not move any further, the number of rotations (that is, rotation speed) of the electric motor 400 per unit time rapidly decreases to substantially zero. Therefore, the contact detection unit 530 can compare the change amount of the count value per unit time with a predetermined reference value, and detect that the contact portions 112 come into contact with each other if the change amount of the count value is lower than the reference value.

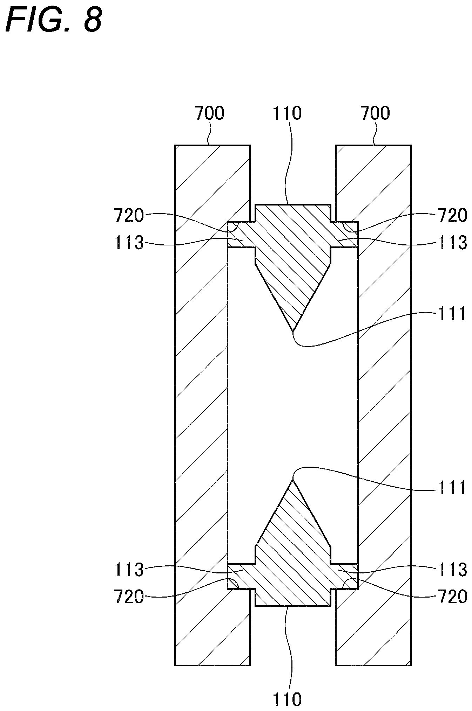

A modification of the first illustrative embodiment will be described. FIG. 8 shows a schematic cross-sectional view of configurations of the blade members 110 and the guide plates 700 on both sides of the blade members 110 according to a modification. The cross section shown in FIG. 8 is a cross section when the blade members 110 and the like are cut perpendicularly to the central axis of the screw shaft 210.

The blade members 110 according to the modification are not provided with the contact portions 112 that come into contact with each other in the fully opened position. As shown in FIG. 8, in the modification, each blade member 110 is provided with a protrusion 113 that protrudes toward the guide plates 700. The guide plates 700 are provided with restriction surfaces 720 that come into contact with the protrusions 113 from the outside in the opening and closing direction of the blade members 110. As the blade members 110 move in the opening direction, the protrusions 113 eventually come into contact with the restriction surfaces 720, so that the blade members 110 cannot move any further. The restriction surfaces 720 that come into contact with the blade members 110 to regulate the movement of the blade members 110 correspond to the "restriction portions" in the modification.

With a state where the restriction surfaces 720 come into contact with the protrusions 113 of the blade members 110 as a reference, the movement amount acquisition unit 520 in the modification performs processing of acquiring the movement amount of each blade member 110 from the state. The contact detection unit 530 detects that the restriction surfaces 720 come into contact with the protrusions 113 of the blade members 110. The same effect as that described in the first illustrative embodiment can also be achieved with such a configuration.

The restriction surfaces 720 functioning as the restriction portions may come into contact with the pair of blade members 110 to restrict an operation range of the cutting blades 111 as in the modification, and may come into contact with and restrict only one of the pair of blade members 110.

In this case, the contact detection unit 530 is configured to detect that only one of the pair of blade members 110 comes into contact with the restriction portions. Further, the movement amount acquired by movement amount acquisition unit 520 is the movement amount of the blade members 110 from a state where one of the pair of blade members 110 comes into contact with the restriction portions. Similarly, the maximum current changing unit 540 makes the current limit value smaller than a previous value at a timing before one of the pair of blade members 110 comes into contact with the restriction portions.

As described above, in the first illustrative embodiment and the above modification, a distance between the cutting blades 111 is the longest when at least one of the pair of blade members 110 comes into contact with the restriction portions.

A second illustrative embodiment is described. In the following, points different from the first illustrative embodiment will be mainly described, and descriptions of points common to those of the first illustrative embodiment will be omitted as appropriate. The present illustrative embodiment is different from the first illustrative embodiment in that the distance between the cutting blades 111 is the shortest when at least one of the pair of blade members 110 comes into contact with the restriction portions.

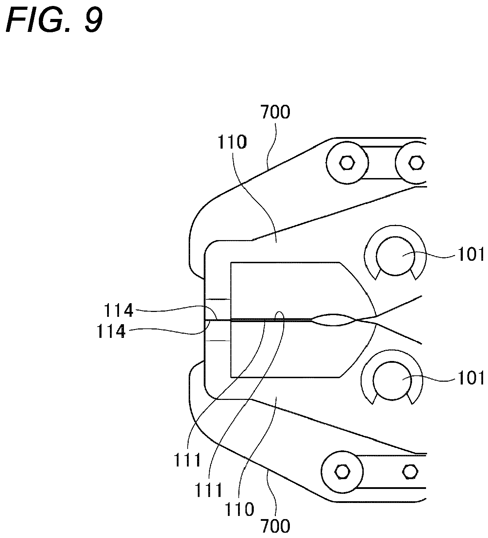

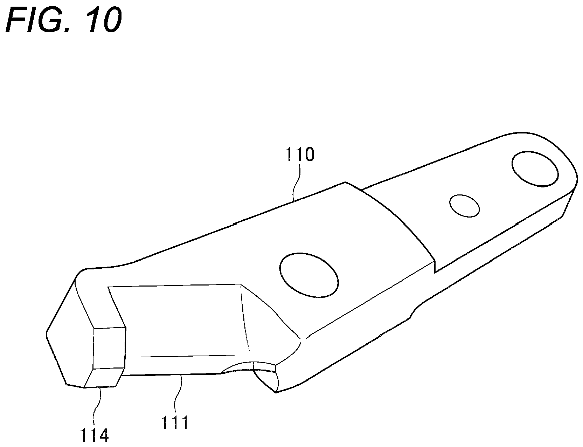

As shown in FIG. 9 and FIG. 10, each of the blade members 110 according to the present illustrative embodiment is provided with a contact portion 114. The contact portion 114 is provided at a position adjacent to the cutting blade 111 on a front end side, and is provided in a manner of slightly protruding from the cutting blade 111 toward the other cutting blade 111. Therefore, when the cutting blades 111 are moved in the closing direction, as shown in FIG. 9, the contact portions 114 first come into contact with each other before the cutting blades 111 come into contact with each other, and the blade members 110 cannot move any further.

The contact portion 114 of one blade member 110 comes into contact with the contact portion 114 of the other blade member 110 to restrict an operable range of the other blade member 110. Each contact portion 114 corresponds to a "restriction portion" in the present illustrative embodiment.

In the present illustrative embodiment, in the fully closed position, a slight gap is also formed between the cutting blades 111. Therefore, a situation where the cutting blades 111 collide with each other is reliably prevented.

Instead of such an aspect, a protrusion amount of the contact portion 114 with respect to the cutting blade 111 may be set to zero. In this case, the contact portions 114 also come into contact with each other at the same time as the pair of cutting blades 111 come into contact with each other.

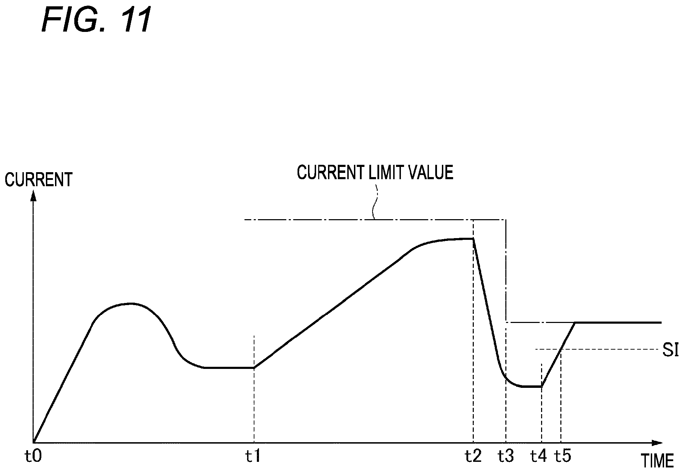

FIG. 11 shows an example of a temporal change of current supplied to the electric motor 400 when the reinforcing bar is cut. Time t0 represents an operation start time, and the cutting blades 111 at this time point are fully opened.

Immediately after the cutting of the reinforcing bar is started, as the cutting blades 111 close, current supplied to the electric motor 400 also increases. When acceleration of the cutting blades 111 is completed, current gradually decreases and becomes substantially constant.

Time t1 in FIG. 11 represents a time when the cutting blades 111 come into contact with the reinforcing bar. After t1, a load on the electric motor 400 increases, and thus, current supplied to the electric motor 400 gradually increases. However, current is less than or equal to the current limit value indicated by a dashed line.

Time t2 in FIG. 11 represents a time when the reinforcing bar breaks. When the reinforcing bar breaks, the load on the electric motor 400 decreases rapidly, and current also decreases rapidly. Then, current becomes substantially constant.

Time t4 in FIG. 11 represents a time when the contact portions 114 come into contact with each other and become fully closed. Thereafter, the load on the electric motor 400 increases rapidly, and thus, current also increases rapidly. The contact detection unit 530 according to the present illustrative embodiment can detect that the cutting blades 111 are in the fully closed position by comparing current supplied to the electric motor 400 with a predetermined threshold SI.

In the example of FIG. 11, at the time t3, which is after the time t2 and before the time t4, the maximum current changing unit 540 changes the current limit value to a smaller value than before. The current limit value after the time t3 is set as a value slightly larger than the threshold SI. Therefore, at a time t5 immediately after current supplied to the electric motor 400 exceeds threshold SI, current reaches the current limit value and does not increase any further. Therefore, the force pressing the contact portions 114 against each other does not become too large. The current limit value after the time t3 may be set to the same value as the threshold SI.

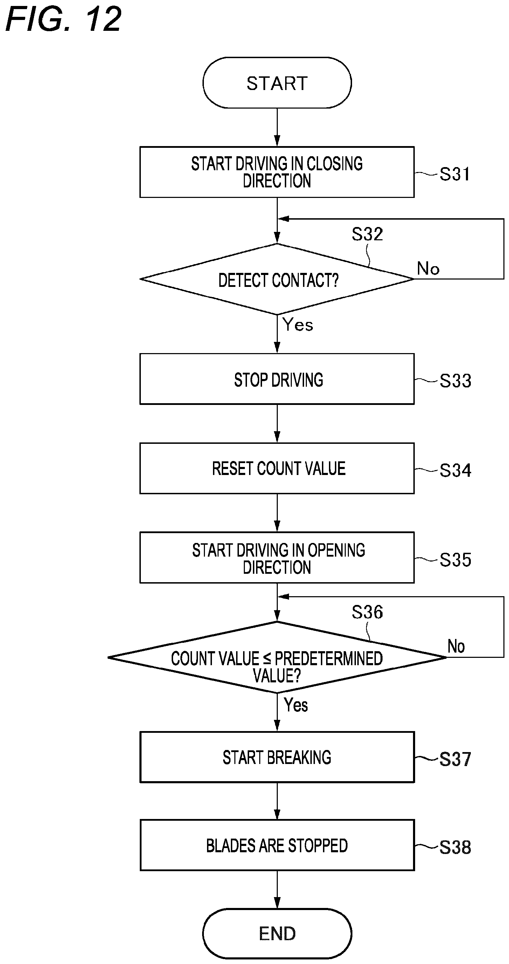

A specific flow of processing executed by the control board 500 will be described. In the present illustrative embodiment, when the main power supply is turned on and the cutting device 10 is started, initialization processing similar to that in the first illustrative embodiment (FIG. 5) is performed. A series of processing shown in FIG. 12 is executed by the control board 500 according to the present illustrative embodiment instead of the series of the processing shown in FIG. 5.

In a first step S31, the control unit 510 performs processing of driving the electric motor 400 to start operating the cutting blades 111 in the closing direction. After that, the cutting blades 111 are closed at a substantially constant speed.

In step S32 following step S31, the contact detection unit 530 determines whether the contact between the contact portions 114 is detected. Similar to the first illustrative embodiment, this determination is made based on whether the value of current supplied to the electric motor 400 exceeds the predetermined reference value.

If the contact between the contact portions 114 is not detected, that is, if the value of current supplied to the electric motor 400 is less than or equal to the reference value, the processing in step S32 is executed again while driving of the electric motor 400 is continued. If the contact between the contact portions 114 is detected, that is, if the value of current supplied to the electric motor 400 exceeds the reference value, the processing proceeds to step S33.

In step S33, driving of the electric motor 400 is stopped. Accordingly, the cutting blades 111 are stopped at the fully closed position.

In step S34 following step S33, the count value of the pulse signal transmitted from the rotation sensor 420 is reset to zero. After this, the count value can be used as a value representing an absolute position of each cutting blade 111.

In step S35 following step S34, the control unit 510 performs the processing of driving the electric motor 400 to start operating the cutting blades 111 in the opening direction. After that, the cutting blades 111 are opened at a substantially constant speed.

In step S36 following step S35, it is determined by the control board 500, for example, whether the movement amount acquired by the movement amount acquisition unit 520, that is, the count value is less than or equal to a predetermined value. The "predetermined value" is preset as a value corresponding to a position where braking of the cutting blades 111 moving in the opening direction is to be started. For example, the above predetermined value may be set as a value corresponding to a position where the cutting blades 111 move from the fully opened position to a front side by a braking distance. Considering that the braking distance changes depending on an operation speed of the cutting blades 111, the above predetermined value may be changed each time depending on the operation speed of the cutting blades 111.

If the count value exceeds the predetermined value, the processing in step S36 is executed again while the operation of the cutting blades 111 is continued. If the count value is less than or equal to the predetermined value, the processing proceeds to step S37. In step S37, the control unit 510 starts braking the cutting blades 111. Then, the cutting blades 111 are stopped at the fully opened position, which is the target position, in step S38. The cutting device 10 enters into the standby state with the cutting blades 111 in the fully opened state.

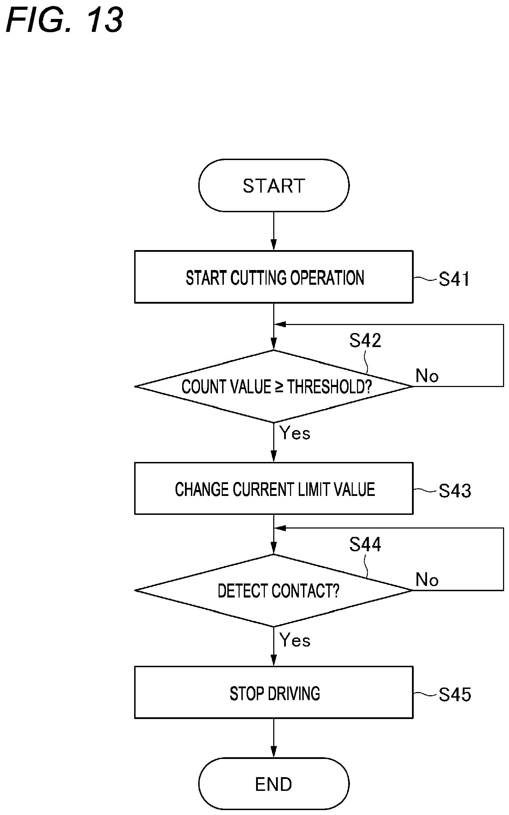

In the standby state, when the user operates and turns on the trigger switch 12, processing shown in FIG. 13 in the present illustrative embodiment is started.

In a first step S41 of the processing, the control unit 510 performs processing of driving the electric motor 400 to start operating the cutting blades 111 in the closing direction. The processing is the same as the processing performed in step S11 in FIG. 6.

In step S42 following step S41, it is determined by the control board 500, for example, whether the movement amount acquired by the movement amount acquisition unit 520, that is, the count value is larger than or equal to a predetermined threshold. The "threshold" is preset as a value corresponding to a position at a timing when the current limit value is to be changed to a smaller value than before. The timing is the time t3 in the example of FIG. 11. If the count value is less than the threshold, the processing in step S42 is executed again while the operation of the cutting blades 111 is continued. If the count value becomes larger than or equal to the threshold, the processing proceeds to step S43.

In step S43, the maximum current changing unit 540 performs the processing of changing the current limit value to a smaller value than before. Since an upper limit of a force that can be generated by the cutting blades 111 is reduced, a situation where the contact portions 114 violently collide with each other when reaching the fully opened position is prevented. Accordingly, there is no need to ensure durability of the blade members 110 and surrounding members thereof more than necessary, and thus, it is possible to reduce a size and a weight of the members.

Accordingly, the maximum current changing unit 540 determines a timing to change the current limit value based on the movement amount (that is, count value) acquired by the movement amount acquisition unit 520. The timing to change the current limit value to a smaller value is a time when the pair of cutting blades 111 are operating, and is preferably a timing before the contact portions 114 of the blade members 110 come into contact with each other. That is, as in the present illustrative embodiment, it is preferable that the threshold used in the determination in step S42 in FIG. 13 be set such that the contact portions 114 come into contact with each other after the current limit value is changed.

In step S44 following step S43, the contact detection unit 530 determines whether the contact between the contact portions 114 is detected. If the contact between the contact portions 114 is not detected, that is, if the value of current supplied to the electric motor 400 is less than or equal to the reference value, the processing in step S44 is executed again while driving of the electric motor 400 is continued. If the contact between the contact portions 114 is detected, that is, if the value of current supplied to the electric motor 400 exceeds the reference value, the processing proceeds to step S45.

In step S45, driving of the electric motor 400 is stopped. Accordingly, the cutting blades 111 are stopped at the fully closed position. Then, similar to step S34 in FIG. 12, the processing of resetting the count value of the pulse signal to zero may be performed.

When the cutting blades 111 are moved to the fully closed position, the electric motor 400 may be driven until the contact portions 114 come into contact with each other as described above. Alternatively, the braking similar to that in step S37 in FIG. 12 may be performed at a predetermined timing before the contact.

After the cutting of the reinforcing bar is completed, processing of returning the cutting blades 111 to the fully opened position, and setting the cutting device 10 in the standby state again is performed. The processing is implemented, for example, by executing the processing from steps S35 to S37 in FIG. 12 again. The processing of returning the cutting blades 111 to the fully opened position may be automatically started following step S45 in FIG. 13. Alternatively, the processing of returning the cutting blades 111 to the fully opened position may be started, for example, after the user operates the trigger switch 12 to return the trigger switch 12 to the original position thereof (that is, to the OFF state).

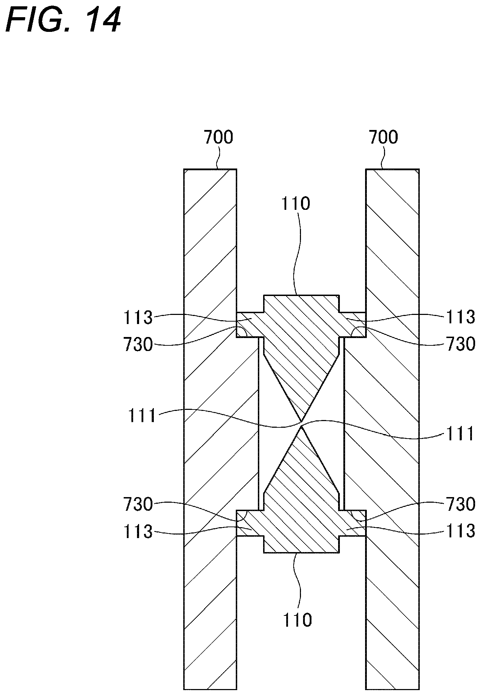

A modification of a second illustrative embodiment will be described. FIG. 14 shows a schematic cross-sectional view of configurations of the blade members 110 and the guide plates 700 on both sides of the blade members 110 according to a modification. The cross section shown in FIG. 14 is a cross section when the blade members 110 and the like are cut perpendicularly to the central axis of the screw shaft 210.

In the modification, the contact portions 114 that come into contact with each other in the fully closed position are not provided. As shown in FIG. 14, in the modification, each blade member 110 is provided with the protrusion 113 that protrudes toward the guide plates 700. The guide plates 700 are provided with restriction surfaces 730 that come into contact with the protrusions 113 from the inside in the opening and closing direction of the blade members 110. As the blade members 110 move in the closing direction, the protrusions 113 eventually come into contact with the restriction surfaces 730, so that the blade members 110 cannot move any further. The restriction surfaces 730 that come into contact with the blade members 110 to regulate movement of the blade members 110 correspond to the "restriction portions" in the modification. In the modification, in a fully closed state where the protrusions 113 come into contact with the restriction surfaces 730, the cutting blades 111 do not come into contact with each other, and a slight gap is present between the cutting blades 111. The protrusions 113 may come into contact with the restriction surfaces 730 at the same time as the cutting blades 111 come into contact with each other.

With a state where the restriction surfaces 730 come into contact with the protrusions 113 of the blade members 110 as a reference, the movement amount acquisition unit 520 in the modification performs processing of acquiring the movement amount of each blade member 110 from the state. The contact detection unit 530 is configured to detect that the restriction surfaces 730 come into contact with the protrusions 113 of the blade members 110. The same effect as that described in the second illustrative embodiment can also be achieved with such a configuration.

The restriction surfaces 730, functioning as the restriction portions, may come into contact with the pair of blade members 110 to restrict the operation range of the cutting blades 111 as in the modification. However, the restriction surfaces 730 may come into contact with and restrict only one of the pair of blade members 110.

In this case, the contact detection unit 530 is configured to detect that only one of the pair of blade members 110 comes into contact with the restriction portions. Further, the movement amount acquired by movement amount acquisition unit 520 is the movement amount of the blade members 110 from a state where one of the pair of blade members 110 comes into contact with the restriction portions. Similarly, the maximum current changing unit 540 makes the current limit value smaller than a previous value at a timing before one of the pair of blade members 110 comes into contact with the restriction portions.

As described above, in the second illustrative embodiment and the above modification, a distance between the cutting blades 111 is the shortest when at least one of the pair of blade members 110 comes into contact with the restriction portions. The restriction portions may come into contact with at least one of the pair of blade members 110 and restrict movement thereof at the same time as or before the pair of cutting blades 111 come into contact with each other.

The present illustrative embodiment has been described above with reference to specific examples. However, the present disclosure is not limited to these specific examples. Design changes made by those skilled in the art as appropriate to these specific examples are also included within the scope of the present disclosure as long as the changes have characteristics of the present disclosure. Elements included in each of the specific examples described above, and arrangement, conditions, shapes, and the like of the elements are not limited to those illustrated, and can be changed as appropriate. The elements included in each of the specific examples described above can be appropriately combined as long as no technical contradiction occurs.

## Claims

1. An electric cutting device, comprising:
a pair of cutting blades having a first blade and a second blade, the pair of cutting blades being configured to clamp and cut an object;
an electric motor configured to generate a driving force necessary for operating the cutting blades;
a control unit configured to control an operation of the electric motor;
a first member provided with the first cutting blades;
a second member provided with the second cutting blade;
a restriction portion configured to come into contact with at least one of the first member and the second member to restrict an operable range of the pair of cutting blades; and
a contact detection unit configured to detect that at least one of the first member and the second member comes into contact with the restriction portion.

2. The cutting device according to claim 1, wherein a state where at least one of the first member and the second member comes into contact with the restriction portion is either a first state or a second state, the first state being a state where a distance between the pair of cutting blades is the longest, the second state being a state where the distance between the pair of cutting blades is the shortest.

3. The cutting device according to claim 2, further comprising:
a movement amount acquisition unit configured to acquire movement amounts of the first member and the second member from the state where at least one of the first member and the second member comes into contact with the restriction portion.

4. The cutting device according to claim 3, wherein the control unit is configured to:
determine a timing to start braking the cutting blades based on the movement amounts acquired by the movement amount acquisition unit.

5. The cutting device according to claim 3, further comprising:
a maximum current changing unit configured to change a maximum value of current allowed to be supplied to the electric motor,
wherein the maximum current changing unit is configured to:
determine a timing to change the maximum value based on the movement amounts acquired by the movement amount acquisition unit.

6. The cutting device according to claim 5, wherein when the pair of cutting blades are operating, the maximum current changing unit is configured to:
change the maximum value to be smaller than a previous value at a timing before at least one of the first member and the second member comes into contact with the restriction portion.

7. The cutting device according to claim 1, wherein when the pair of cutting blades operate in a closing direction, at least one of the first member and the second member comes into contact with the restriction portion at the same time as or before the pair of cutting blades come into contact with each other.

8. The cutting device according to claim 7, wherein when the pair of cutting blades operate in the closing direction, at least one of the first member and the second member comes into contact with the restriction portion at the same time as the pair of cutting blades come into contact with each other.

9. The cutting device according to any one of claims 1 to 8, wherein the contact detection unit is configured to perform the detection of the contact based on an operating parameter of the electric motor.

10. The cutting device according to claim 9, wherein the contact detection unit is configured to:
compare a value of the operating parameter of the electric motor with a predetermined reference value; and
in a case where the value of the operating parameter of the electric motor exceeds the predetermined reference value, detect that at least one of the first member and the second member comes into contact with the restriction portion.

11. The cutting device according to any one of claims 1 to 10, wherein the contact detection unit is configured to perform the detection of the contact based on current supplied to the electric motor.

12. The cutting device according to any one of claims 1 to 10, wherein the contact detection unit is configured to perform the detection of the contact based on a voltage applied to the electric motor.

13. The cutting device according to any one of claims 1 to 10, wherein the contact detection unit is configured to perform the detection of the contact based on the number of rotations of the electric motor.
